# EUROPÄISCHE PATENTSCHRIFT

(11) **EP 4 017 649 B1**
(45) Veröffentlichungstag und Bekanntmachung des Hinweises auf die Patenterteilung: **09.08.2023**
(21) Anmeldenummer: 20785728.5
(22) Anmeldetag: 30.09.2020
(51) Int. Cl.: B05C 5/02, F16K 31/122

(54) **VORRICHTUNG ZUM AUFTRAGEN VON VISKOSEM MATERIAL**
APPARATUS FOR APPLYING VISCOUS MATERIAL
APPAREIL POUR APPLIQUER UN MATÉRIAU VISQUEUX

(30) Priorität: 16.12.2019 DE 102019134450
(43) Veröffentlichungstag der Anmeldung: 29.06.2022
(73) Patentinhaber: Atlas Copco IAS GmbH, 75015 Bretten (DE)
(72) Erfinder: BITZEL, Heiko, 76131 Karlsruhe (DE)
(74) Vertreter: Patentanwälte Bregenzer und Reule Partnerschaftsgesellschaft mbB
(86) Internationale Anmeldenummer: PCT/EP2020/077343
(87) Internationale Veröffentlichungsnummer: WO 2021/121702

(56) Entgegenhaltungen:
- EP-A2- 0 237 190
- EP-B1- 0 237 190
- WO-A1-2013/189665
- DE-A1- 10 345 840

## Beschreibung

Die Erfindung betrifft eine Vorrichtung zum Auftragen von viskosem Material auf Werkstücke gemäß Oberbegriff des Anspruchs 1.

Solche Vorrichtungen, vgl. beispielsweise WO 2013/189665 A1, die insbesondere als Drehlanze ausgebildet sein können, werden dazu verwendet, viskose Materialien wie beispielsweise Klebstoffe, Dichtstoffe oder Lacke auf Werkstücke aufzutragen. Dabei kommen oft mehrere an der Drehlanze montierte Düsen unterschiedlicher Geometrie zum Einsatz, in die jeweils ein Materialauslass mündet. Jedem Materialauslass ist ein Nadelventil zugeordnet, dessen Ventilnadel den betreffenden Materialauslass an einem Ventilsitz verschließt oder freigibt. Zur Betätigung der Ventilnadeln sind Zylinder vorgesehen, wobei jede Ventilnadel mit dem Kolben eines Zylinders verbunden ist, welcher mittels Druckbeaufschlagung durch ein Fluid, insbesondere Druckluft, bewegt wird. Bei bekannten Vorrichtungen der eingangs genannten Art sind die Zylinder in gleichem Abstand zu den Ventilsitzen nebeneinander angeordnet, so dass die gesamte Vorrichtung relativ breit baut. Dieser Nachteil fällt umso mehr ins Gewicht, je mehr Materialauslässe vorhanden sind und je mehr Zylinder aus diesem Grund zur Betätigung der Ventilnadeln vorhanden sein müssen.

Es ist daher Aufgabe der Erfindung, eine Vorrichtung der eingangs genannten Art derart weiterzubilden, dass sie schmaler bauen kann.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die der Betätigung der Ventilnadeln dienenden Zylinder in Reihe anzuordnen, von den Ventilsitzen aus gesehen also hintereinander und nicht nebeneinander. Die Kolbenstangen der Zylinder mit Ausnahme des den Ventilsitzen nächstgelegenen Zylinders, welche der Beaufschlagung der Ventilnadeln dienen und auch einstückig mit den Ventilnadeln ausgebildet sein bzw. in diese übergehen können, müssen dann abgedichtet durch die Kolbenkammer(n) des bzw. der näher an den Ventilsitzen angeordneten Zylinders bzw. Zylindern durchgeführt werden. Indem die Zylinder hintereinander angeordnet sind statt nebeneinander kann die erfindungsgemäße Vorrichtung schmaler bauen, da im Bereich der Zylinder ihr Querschnitt im Wesentlichen dem Querschnitt eines Zylinders entsprechen kann und nicht den addierten Querschnitten mehrerer nebeneinander angeordneter Zylinder entsprechen muss.

Zweckmäßig ist die Kolbenstange jedes Zylinders abgedichtet durch die Kolbenkammer jedes weiteren näher an den Ventilsitzen angeordneten Zylinders durchgeführt. Desweiteren wird bevorzugt, dass die Querschnitte der Zylinder deckungsgleich sind in dem Sinne, dass alle Zylinderquerschnitte senkrecht zu einer gemeinsamen Längsmittelachse stehen und die geometrische Figur eines geraden Zylinders aufspannen.

Gemäß einer vorteilhaften Weiterbildung der Erfindung ist jeder Kolben mit einer weiteren Kolbenstange verbunden, die aus der jeweiligen Kolbenkammer aus einer den Ventilsitzen abgewandten Rückseite herausgeführt ist, und die abgedichtet durch die Kolbenkammer jedes weiter von den Ventilsitzen entfernt angeordneten Zylinders durchgeführt ist. Die weiteren Kolbenstangen können dann mittels eines an einem Widerlager abgestützten Rückstellelements mit einer Kraft beaufschlagt werden, gegen die sie beim Abheben der jeweiligen Ventilnadel vom Ventilsitz beweglich sind. Ein Abheben vom Ventilsitz erfolgt dann durch Druckbeaufschlagung des betreffenden Kolbens mittels des Fluids. Eine Schließbewegung, bei der die Ventilnadel auf den Ventilsitz gedrückt wird, erfolgt durch die Rückstellkraft des betreffenden Rückstellelements, so dass eine Fail-Safe-Funktion gegeben ist.

Da die Kolbenstangen bzw. Ventilnadeln nebeneinander angeordnet sein müssen, ist zweckmäßig zumindest ein Teil der Kolbenstangen und gegebenenfalls zumindest ein Teil der weiteren Kolbenstangen außermittig mit dem jeweiligen Kolben verbunden. Eine mittige Verbindung mit dem Kolben ist allenfalls für eine Kolbenstange und eine weitere Kolbenstange denkbar.

Gemäß einer vorteilhaften Weiterbildung der Erfindung ist zumindest ein Kolben und vorzugsweise jeder Kolben zumindest teilweise aus ferromagnetischem Material gefertigt oder fest mit einem ferromagnetischen Element verbunden, und dem betreffenden Zylinder ist ein Magnetsensor zur Lagebestimmung des jeweiligen Kolbens in der Kolbenkammer zugeordnet. Dies ermöglicht eine recht genaue Bestimmung der Lage der Kolben in der jeweiligen Kolbenkammer und damit auch eine Bestimmung der Lage der Ventilnadel sowie eine Kontrolle des Schließzustands des jeweiligen Nadelventils. Diese Messmethode wird durch die erfindungsgemäße Anordnung der Zylinder in Reihe erst praktisch durchführbar, da bei einer Anordnung der Zylinder nebeneinander die Messergebnisse der Sensoren durch die Signale aller Kolben beeinflusst würden. Dabei wird bevorzugt, dass die Kolben aus nicht ferromagnetischem Material bestehen und das jeweilige ferromagnetische Element, das vom zugeordneten Magnetsensor erfasst wird, ein rings um den Kolben umlaufendes oder in ihn eingebettetes Band aus ferromagnetischem Material ist.

Solche Vorrichtungen werden insbesondere als Drehlanzen ausgebildet, bei denen die Nadelventile in einem Gehäuse aufgenommen und gemeinsam um eine in der Längsrichtung verlaufende Längsmittelachse drehbar sind. Die Zuführung von Material zum jeweiligen Materialauslass erfolgt dabei durch einen Mantel des Gehäuses mittels einer Drehdurchführung, wie auch im Detail in der WO 2013/189665 A1 beschrieben. Diese Ausbildung ermöglicht beispielsweise eine genaue Positionierung der Vorrichtung bezüglich des Werkstücks mittels der Bewegung eines Roboters.

Im Folgenden wird die Erfindung anhand eines in der Zeichnung dargestellten Ausführungsbeispiels näher erläutert. Es zeigen
- Fig. 1a: eine perspektivische Teilansicht einer Vorrichtung zum Auftragen von viskosem Material, teilweise im Schnitt;
- Fig. 1b: eine Seitenansicht entsprechend der Darstellung in Fig. 1a;
- Fig. 1c: eine Ansicht von unten entsprechend der Darstellung von Fig. 1a, 1b und

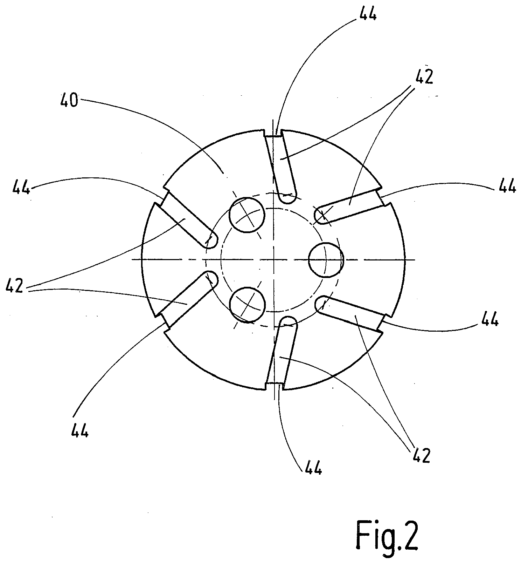

- Fig. 2: eine Verteilerplatte für Druckluft.

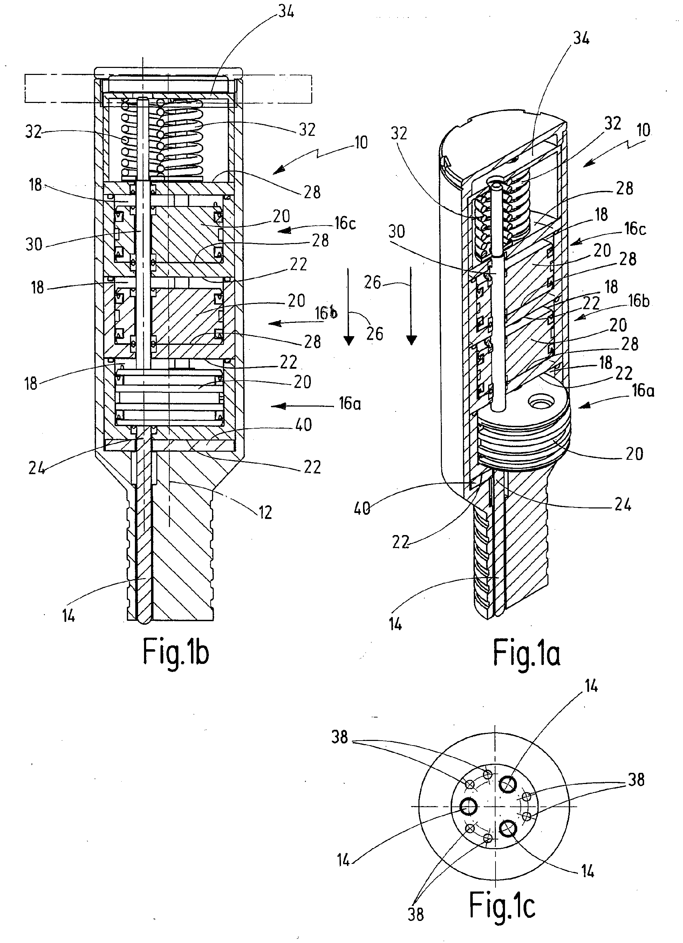

In Fig. 1a, b, c sind nur die Teile einer Vorrichtung zum Auftragen von viskosem Material dargestellt, die für das Verständnis der Erfindung wesentlich sind. Diese Vorrichtung 10 ist beim gezeigten Ausführungsbeispiel als Drehlanze ausgebildet, die um ihre Längsmittelachse 12 drehbar in einem nicht dargestellten Gehäuse aufgenommen ist. Die Drehlanze weist drei Nadelventile auf, wobei nur von einem der Nadelventile eine Ventilnadel 14 dargestellt ist. Nicht dargestellt sind die Ventilsitze, an denen die Ventilnadeln 14 aufsitzen, um jeweils einen Materialauslass zu sperren. Dabei sind der Anzahl der Nadelventile entsprechend drei Materialauslässe vorgesehen, denen über eine Drehdurchführung jeweils viskoses Material durch das Gehäuse zugeführt wird, welches durch Öffnen der Nadelventile aus dem Materialauslass austreten kann. Jeder Materialauslass mündet in eine nicht in der Zeichnung dargestellte Auftragsdüse, wobei die Drehlanze im vorliegenden Fall drei unterschiedliche Auftragsdüsen aufweist, um unterschiedliche Auftragsgeometrie des viskosen Materials erzielen zu können, ohne einen Düsenwechsel durchführen zu müssen.

Jeder der Ventilnadeln 14 ist zu deren Betätigung ein Zylinder 16a, 16b, 16c zugeordnet, in dessen Kolbenkammer 18 ein Kolben 20 hin und her beweglich aufgenommen ist. Aus der den Ventilsitzen zugewandten Stirnseite 22 jedes der Zylinder 16a, 16b, 16c ist eine fest mit dem jeweiligen Kolben 20 verbundene Kolbenstange 24 herausgeführt, die sich in einer Längsrichtung 26 parallel zur Längsmittelachse 12 erstreckt und zu ihrem Ende hin in die Ventilnadel 14 übergeht. Aus der den Ventilsitzen abgewandten Rückseite 28 jedes Zylinders 16a, 16b, 16c ist eine weitere Kolbenstange 30 herausgeführt, die sich zu einem Rückstellelement in Form einer Druckfeder 32 erstreckt und an dieser abgestützt ist, welche sich wiederum an einem fest mit den Zylindern 16a, 16b, 16c verbundenen Widerlager 34 abstützt. Die Kraft der Druckfedern 32 drückt die weiteren Kolbenstangen 30 und damit auch die Kolben 20, die Kolbenstangen 24 und die Ventilnadeln 14 auf die Ventilsitze, während ein Abheben der Ventilnadeln 14 von den Ventilsitzen durch Einleiten von Druckluft in die Kolbenkammer 18 des jeweiligen Zylinders 16a, 16b, 16c erfolgt.

Die Zylinder 16a, 16b, 16c weisen identische Abmessungen auf und sind in Reihe, also in der Längsrichtung 26 hintereinander angeordnet. Die Kolbenstangen 24 und die weiteren Kolbenstangen 30 sind jeweils außermittig, also im Abstand zur Längsmittelachse 12 mit den Kolben 20 verbunden. Aufgrund der Anordnung der Zylinder 16a, 16b, 16c in Reihe ist die weitere Kolbenstange 30 des am nächsten zu den Ventilsitzen angeordneten Zylinders 16a mittels gleitender Dichtungen abgedichtet durch die beiden weiter von den Ventilsitzen entfernt angeordneten Zylinder 16b, 16c durchgeführt. Auf dieselbe Weise ist die Kolbenstange 24 des in der Mitte angeordneten Zylinders 16b abgedichtet durch die Kolbenkammer 18 des näher an den Ventilsitzen angeordneten Zylinders 16a durchgeführt, während seine weitere Kolbenstange 30 abgedichtet durch die Kolbenkammer 18 des weiter von den Ventilsitzen entfernten Zylinders 16c durchgeführt ist. Die Kolbenstange 24 des am weitesten von den Ventilsitzen entfernt angeordneten Zylinders 16c dagegen ist sowohl durch die Kolbenkammer 18 des mittleren Zylinders 16b als auch durch die Kolbenkammer 18 des am nächsten zu den Ventilsitze angeordneten Zylinders 16a abgedichtet durchgeführt. Zudem sind die Kolbenstangen 24 und die weiteren Kolbenstangen 30 durch die Kolben 20 der Zylinder 16a, 16b, 16c durchgeführt, durch deren Kolbenkammern 18 sie durchgeführt sind.

Fig. 1c zeigt eine Ansicht von unten entgegen der Längsrichtung 26. Dort ist gezeigt, wie die Ventilnadeln 14 in gleichen Winkelabständen zueinander und in gleichem Abstand zur Längsmittelachse 12 angeordnet sind. Desweiteren sind für jeden Zylinder 16a, 16b, 16c zwei Druckluftanschlüsse 38 gezeigt, nämlich jeweils ein Druckluftanschluss zur Zuleitung und ein Druckluftanschluss zur Ableitung von Druckluft. Die Druckluftanschlüsse 38 erstrecken sich bis zu einer Verteilerplatte 40, wo sie in radial verlaufende Zwischenkanäle 42 münden, welche wiederum in sich axial zu den jeweiligen Zylindern 16a, 16b, 16c erstreckende Druckluftkanälen 44 münden.

Die Anordnung der Zylinder 16a, 16b, 16c in Reihe ermöglicht eine Überwachung der Position der Kolben 20 in der Kolbenkammer 18 des jeweiligen Zylinders 16a, 16b, 16c und damit auch eine Überwachung der Position der Ventilnadeln 14 bezüglich des jeweiligen Ventilsitzes. Zu diesem Zweck ist jeder Kolben 20 mit einem rings umlaufenden Band aus ferromagnetischem Material versehen, das mit ihm mitbewegt wird, in der Zeichnung aber nicht näher dargestellt ist. Jedem Zylinder 16a, 16b, 16c ist ein Magnetsensor zugeordnet, der die Position des ferromagnetischen Bands detektieren kann. Aufgrund der Anordnung der Zylinder 16a, 16b, 16c in Reihe ist eine Detektion der Position des ferromagnetischen Bands zuverlässig möglich, auch wenn die Vorrichtung 10 um die Längsmittelachse 12 gedreht wird.

Zusammenfassend ist folgendes festzuhalten: Die Erfindung betrifft eine Vorrichtung 10 zum Auftragen von viskosem Material auf Werkstücke mit mindestens zwei Materialauslässen, wobei jedem Materialauslass ein Nadelventil zugeordnet ist, durch dessen Ventilnadel 14 der jeweilige Materialauslass an einem Ventilsitz verschließbar ist, und wobei jeder Ventilnadel 14 ein Zylinder 16a, 16b, 16c zugeordnet ist, in dessen Kolbenkammer 18 ein Kolben 20 durch Druckbeaufschlagung mittels eines Fluids beweglich ist, und der eine mit dem Kolben 20 verbundene, an einer den Ventilsitzen zugewandten Stirnseite 22 aus der Kolbenkammer 18 geführte, sich in einer Längsrichtung 26 erstreckende Kolbenstange 24 zur Beaufschlagung der jeweiligen Ventilnadel 14 aufweist. Erfindungsgemäß ist vorgesehen, dass die Zylinder 16a, 16b, 16c in der Längsrichtung 26 hintereinander angeordnet sind und dass die Kolbenstange 24 mindestens eines der Zylinder 16b, 16c abgedichtet durch die Kolbenkammer 18 mindestens eines näher an den Ventilsitzen angeordneten weiteren Zylinders 16a, 16b durchgeführt ist. Zudem überlappen sich die Querschnitte der Zylinder 16a, 16b, 16c zweckmäßig gegenseitig in dem Sinne, dass sich ihre Projektionen aufeinander überlappen.

## Patentansprüche

1. Vorrichtung zum Auftragen von viskosem Material auf Werkstücke mit mindestens zwei Materialauslässen, wobei jedem Materialauslass ein Nadelventil zugeordnet ist, durch dessen Ventilnadel (14) der jeweilige Materialauslass an einem Ventilsitz verschließbar ist, und wobei jeder Ventilnadel (14) ein Zylinder (16a, 16b, 16c) zugeordnet ist, in dessen Kolbenkammer (18) ein Kolben (20) durch Druckbeaufschlagung mittels eines Fluids beweglich ist, und der eine mit dem Kolben (20) verbundene, an einer den Ventilsitzen zugewandten Stirnseite (22) aus der Kolbenkammer (18) geführte, sich in einer Längsrichtung (26) erstreckende Kolbenstange (24) zur Beaufschlagung der jeweiligen Ventilnadel (14) aufweist, **dadurch gekennzeichnet, dass** die Zylinder (16a, 16b, 16c) in der Längsrichtung (26) hintereinander angeordnet sind und dass die Kolbenstange (24) mindestens eines der Zylinder (16b, 16c) abgedichtet durch die Kolbenkammer (18) mindestens eines näher an den Ventilsitzen angeordneten weiteren Zylinders (16a, 16b) durchgeführt ist.

2. Vorrichtung nach Anspruch 1, **dadurch gekennzeichnet, dass** die Kolbenstange (24) jedes Zylinders (16b, 16c) abgedichtet durch die Kolbenkammer jedes weiteren näher an den Ventilsitzen angeordneten Zylinders (16a, 16b) durchgeführt ist.

3. Vorrichtung nach Anspruch 1 oder 2, **dadurch gekennzeichnet, dass** die Querschnitte der Zylinder (16a, 16b, 16c) deckungsgleich sind.

4. Vorrichtung nach einem der vorangehenden Ansprüche, **dadurch gekennzeichnet, dass** jeder der Kolben (20) mit einer weiteren Kolbenstange (30) verbunden ist, die aus der jeweiligen Kolbenkammer (18) aus einer den Ventilsitzen abgewandten Rückseite (28) herausgeführt ist, und die abgedichtet durch die Kolbenkammer (18) jedes weiter von den Ventilsitzen entfernt angeordneten Zylinders (16b, 16c) durchgeführt ist.

5. Vorrichtung nach Anspruch 4, **dadurch gekennzeichnet, dass** jede weitere Kolbenstange (30) mittels eines an einem Widerlager (34) abgestützten Rückstellelements (32) beaufschlagt ist, gegen dessen Rückstellkraft sie beim Abheben der jeweiligen Ventilnadel (14) vom Ventilsitz beweglich ist.

6. Vorrichtung nach einem der vorangehenden Ansprüche, **dadurch gekennzeichnet, dass** zumindest ein Teil der Kolbenstangen (24) und gegebenenfalls zumindest ein Teil der weiteren Kolbenstangen (30) außermittig mit dem jeweiligen Kolben (20) verbunden ist.

7. Vorrichtung nach einem der vorangehenden Ansprüche, **dadurch gekennzeichnet, dass** zumindest ein Kolben (20) und vorzugsweise jeder Kolben (20) zumindest teilweise aus ferromagnetischem Material besteht oder fest mit einem ferromagnetischen Element verbunden ist und dass dem betreffenden Zylinder (16a, 16b, 16c) ein Magnetsensor zur Lagebestimmung des jeweiligen Kolbens (20) in der Kolbenkammer (18) zugeordnet ist.

8. Vorrichtung nach Anspruch 7, **dadurch gekennzeichnet, dass** jeder Kolben (20) aus nicht ferromagnetischem Material besteht und das jeweilige ferromagnetische Element ein rings um den Kolben (20) umlaufendes oder in ihn eingebettetes Band ist.

9. Vorrichtung nach einem der vorangehenden Ansprüche, **dadurch gekennzeichnet, dass** die Nadelventile in einem Gehäuse aufgenommen und gemeinsam um eine in der Längsrichtung (26) verlaufende Längsmittelachse (12) drehbar sind und dass eine Drehdurchführung zum Zuführen von Material durch einen Mantel des Gehäuses zum jeweiligen Materialauslass vorgesehen ist.

## Claims

1. Apparatus for applying viscous material to workpieces, having at least two material outlets, wherein a needle valve is assigned to each material outlet, by means of the valve needle (14) of which the corresponding material outlet can be closed off at a valve seat, and wherein a cylinder (16a, 16b, 16c) is assigned to each valve needle (14), in the piston chamber (18) of which cylinder a piston (20) can be moved by means of a fluid, by applying pressure, and which cylinder has a piston rod (24) that is connected with the piston (20), is passed through out of the piston chamber (18) at an end face (22) that faces the valve seats, and extends in a longitudinal direction (26), for applying force to the corresponding valve needle (14), **characterized in that** the cylinders (16a, 16b, 16c) are arranged one behind the other in the longitudinal direction (26), and that the piston rod (24) of at least one of the cylinders (16b, 16c) is passed through the piston chamber (18) of at least one further cylinder (16a, 16b) arranged closer to the valve seats in a sealed off manner.

2. Apparatus according to claim 1, **characterized in that** the piston rod (24) of each cylinder (16b, 16c) is passed through the piston chamber of each cylinder (16a, 16b) arranged closer to the valve seats in a sealed off manner.

3. Apparatus according to claim 1 or 2, **characterized in that** the cross-sections of the cylinders (16a, 16b, 16c) are congruent.

4. Apparatus according to one of the preceding claims, **characterized in that** each of the pistons (20) is connected with a further piston rod (30), which is passed out of the corresponding piston chamber (18) from a rear side (28) that faces away from the valve seats, and which is passed through the piston chamber (18) of every further cylinder (16b, 16c) arranged farther away from the valve seats in a sealed off manner.

5. Apparatus according to claim 4, **characterized in that** each further piston rod (30) has a force applied to it by means of a reset element (32) supported on a counter-bearing (34), against the reset force of which it can be moved when the corresponding valve needle (14) is lifted off the valve seat.

6. Apparatus according to one of the preceding claims, **characterized in that** at least a part of the piston rods (24) and, if applicable, at least a part of the further piston rods (30) is eccentrically connected with the corresponding piston (20).

7. Apparatus according to one of the preceding claims, **characterized in that** at least one piston (20) and preferably every piston (20) is produced, at least in part, from ferromagnetic material, or is firmly connected with a ferromagnetic element, and a magnetic sensor is assigned to the cylinder (16a, 16b, 16c) in question, so as to determine the position of the corresponding piston (20) in the piston chamber (18).

8. Apparatus according to claim 7, **characterized in that** each piston (20) consists of a non-ferromagnetic material, and that the corresponding ferromagnetic element is a band that runs around the piston (20) or is embedded into it.

9. Apparatus according to one of the preceding claims, **characterized in that** the needle valves are accommodated in a housing and can rotate jointly around a longitudinal center axis (12) that runs in the longitudinal direction (26), and that a rotary passage is provided for feed of material through a mantle of the housing, to the corresponding material outlet.

## Revendications

1. Dispositif conçu pour déposer un matériau visqueux sur des pièces d'usinage, muni d'au moins deux sorties de matériau, une soupape à pointeau étant associée à chaque sortie de matériau, le pointeau (14) de ladite soupape permettant la fermeture de la sortie respective de matériau au niveau d'un siège d'obturation, et un cylindre (16a, 16b, 16c) étant associé à chaque pointeau (14) de soupape, un piston (30) étant mobile dans la chambre (18) à piston dudit cylindre, par pressurisation au moyen d'un fluide, lequel cylindre comporte, en vue de solliciter le pointeau (14) de soupape considéré, une tige (24) qui s'étend dans une direction longitudinale (26), est reliée audit piston (20) et est guidée hors de ladite chambre (18) à piston au niveau d'une face extrême (22) tournée vers les sièges d'obturation, **caractérisé par le fait que** les cylindres (16a, 16b, 16c) sont agencés en succession mutuelle dans la direction longitudinale (26) ; et **par le fait que** la tige (24) du piston d'au moins l'un des cylindres (16b, 16c) traverse, de manière étanche, la chambre (18) à piston d'au moins un autre cylindre (16a, 16b) plus rapproché des sièges d'obturation.

2. Dispositif selon la revendication 1, **caractérisé par le fait que** la tige (24) du piston de chaque cylindre (16b, 16c) traverse, de manière étanche, la chambre à piston de chaque autre cylindre (16a, 16b) plus rapproché des sièges d'obturation.

3. Dispositif selon la revendication 1 ou 2, **caractérisé par le fait que** les sections transversales des cylindres (16a, 16b, 16c) sont coïncidentes en superposition.

4. Dispositif selon l'une des revendications précédentes, **caractérisé par le fait que** chacun des pistons (20) est relié à une tige additionnelle (30) qui dépasse au-delà de la chambre respective (18) à piston, à partir d'une face postérieure (28) tournée à l'opposé des sièges d'obturation, et qui traverse, de manière étanche, la chambre (18) à piston de chaque cylindre (16b, 16c) plus éloigné desdits sièges d'obturation.

5. Dispositif selon la revendication 4, **caractérisé par le fait que** chaque tige additionnelle (30) de piston est sollicitée au moyen d'un élément de rappel (32) prenant appui sur une contre-butée (34) et est mobile, en opposition à la force de rappel dudit élément, lorsque le pointeau (14) de soupape considéré est soulevé à l'écart du siège d'obturation.

6. Dispositif selon l'une des revendications précédentes, **caractérisé par le fait qu'**au moins une partie des tiges (24) de pistons et, le cas échéant, au moins une partie des tiges additionnelles (30) de pistons sont reliées, de manière excentrée, au piston (20) considéré.

7. Dispositif selon l'une des revendications précédentes, **caractérisé par le fait qu'**au moins un piston (20) et, de préférence, chaque piston (20) est au moins partiellement constitué d'un matériau ferromagnétique, ou est relié rigidement à un élément ferromagnétique ; et **par le fait qu'**un capteur magnétique est associé au cylindre (16a, 16b, 16c) considéré, en vue de déterminer la position que le piston respectif (20) occupe dans la chambre (18) à piston.

8. Dispositif selon la revendication 7, **caractérisé par le fait que** chaque piston (20) est constitué d'un matériau non ferromagnétique, et l'élément ferromagnétique respectif est un ruban qui ceinture annulairement ledit piston (20), ou est noyé dans ce dernier.

9. Dispositif selon l'une des revendications précédentes, **caractérisé par le fait que** les pointeaux des soupapes sont logés dans un carter et peuvent tourner conjointement autour d'un axe médian longitudinal (12) s'étendant dans la direction longitudinale (26) ; et **par le fait qu'**une traversée rotative est prévue pour l'amenée de matériau vers la sortie de matériau considérée, à travers une enveloppe dudit carter.
